# EUROPÄISCHE PATENTSCHRIFT

(11) **EP 2 645 299 B1**
(45) Veröffentlichungstag und Bekanntmachung des Hinweises auf die Patenterteilung: **19.10.2016**
(21) Anmeldenummer: 12162049.6
(22) Anmeldetag: 29.03.2012
(51) Int. Cl.: G06K 7/10, H04B 1/30, G01R 35/00, G06K 7/00

(54) **Lesegerät zum Datenaustausch mit einem mobilen Datenspeicher**
Reader for exchanging data with a mobile data storage device
Appareil de lecture destiné à l'échange de données avec une mémoire de données mobile

(43) Veröffentlichungstag der Anmeldung: 02.10.2013
(73) Patentinhaber: Siemens Aktiengesellschaft, 80333 München (DE)
(72) Erfinder: Horst, Dieter, 90556 Cadolzburg (DE)

(56) Entgegenhaltungen:
- EP-A1- 1 655 684
- WO-A1-2008/092283
- WO-A2-00/63830

## Beschreibung

Die Erfindung betrifft ein Lesegerät zum Datenaustausch mit einem mobilen Datenspeicher gemäß dem Oberbegriff des Patentanspruchs 1.

In industriellen Anwendungen, aber auch in anderen Bereichen werden zur Identifizierung von Waren und Produktionsgütern mobile Datenspeicher eingesetzt, welche drahtlos mittels eines elektromagnetischen Feldes erfasst und gelesen werden.

Dies betrifft insbesondere die UHF-RFID-Transponder, welche für die genannten Zwecke weit verbreitet sind. Insbesondere in der Industrie (Fertigung) und im Automobilbau sind im Vergleich zu anderen Einsatzgebieten, beispielsweise Warenwirtschaft, Einzelhandel und Logistik, weitaus höhere Leseraten gefordert, wobei die Leserate den Anteil erfolgreicher Zugriffe auf die Datenspeicher gibt. Diese liegt in der verarbeitenden Industrie und im Automobilbau typischer Weise bei etwa 99,98%.

Gerade im industriellen Umfeld, bei dem die besonders guten Leseraten gefordert sind, erschweren häufig äußere Bedingungen, etwa das Vorhandensein von metallischen, reflektierenden Flächen, elektromagnetische Störungen, Bewegungen der mit den Datenspeichern gekennzeichneten Gegenstände etc. den Datenaustausch mit den Datenspeichern (Transpondern). Um dennoch die geforderten hohen Leseraten erreichen zu können, ist es unumgänglich, bei Störungen eine genaue Analyse durchführen zu können. Nur so können Ursachen für die Störungen erkannt und abgestellt werden.

Üblicher Weise werden bei häufigeren Störungen, also Fehl-Lesungen, Messempfänger in der Nähe des eingesetzten Lesegerätes eingesetzt, wobei mittels dieser Messempfänger der Datenaustausch zwischen einem Lesegerät und den erfassten Datenspeichern (Transpondern) aufgezeichnet und später ausgewertet wird. Dies bedeutet, dass sämtliche Aktivität auf der "Luftschnittstelle" der verwendeten Funkkanäle aufgezeichnet ("geloggt") wird, wonach unmittelbar ("online") oder später ("offline") in dem aufgezeichneten Verlauf des Hochfrequenz-oder Zwischenfrequenz-Signals eine Ursache für die Störung gesucht wird, beispielsweise Störfrequenzen, Feldschwächungen, Protokoll-Fehler, Signal-Überschneidungen (Overlap, Echoes) etc.

Bisher werden zur Fehleranalyse als Messempfänger sog. "Real Time Spectrum Analyser" (RSA) eingesetzt. Dazu wird unmittelbar neben der Lesestelle, also dem Standort des produktiv eingesetzten Lesegerätes bzw. dessen Antenne, eine Messantenne platziert, mit welcher die hochfrequenten Signale dem RSA zugeführt werden. Das Signal wird laufend aufgezeichnet und gespeichert. Bei einem Fehler wird die Aufzeichnung gestoppt (manuell oder automatisch durch eine Steuerung, an die das Lesegerät angeschlossen ist), und der Fehler wird analysiert.

Dieses Vorgehen bei der Störungsanalyse ist jedoch mit Nachteilen behaftet. So ist es beispielsweise sehr aufwändig, nach dem Erkennen einer erhöhten Fehlerrate einen speziellen Messempfänger zu beschaffen und zu platzieren, wobei dessen Antenne möglichst nah neben der Antenne des produktiv eingesetzten Lesergerätes angeordnet sein muss. Neben dem damit verbundenen Aufwand muss damit gerechnet werden, dass die Antenne des Messempfängers wiederum einen Einfluss auf das gemessene elektromagnetische Feld hat, was bedeutet, dass die Anwesenheit der Antenne des Messempfängers das Messergebnis verfälscht. Darüber hinaus kann mit dem Messempfänger zwar das Geschehen "der Luftschnittstelle" nachvollzogen werden, jedoch nur mittelbar eine Aussage darüber treffen, welches Signal von dem produktiven Lesegerät tatsächlich empfangen und verarbeitet wurde. Darüber hinaus ist es bei einer solchen Analyse schwierig, einzelne fehlerhafte Lesevorgänge bestimmten Abschnitten des zu Analysezwecken aufgezeichneten Materials zuzuordnen, was im Allgemeinen eine genaue zeitliche Synchronisierung zwischen dem Messempfänger und dem produktiven Lesegerät erfordert. Weiter ist von Nachteil, dass mit dem beschriebenen Verfahren, also dem Einsatz eines speziellen Messempfängers in solchen Anordnungen, die überdurchschnittlich viele Fehler zeigen, die ursprünglich aufgetretenen Fehler überhaupt nicht analysiert werden können, sondern dass man darauf angewiesen ist, dass die Fehler mit derselben Ursache erneut auftreten, sobald der Messempfänger eingesetzt wird.

Die Druckschrift WO 00/63830 - Chieu et al. "Data recovery system for radio frequency identification interrogator" zeigt ein RFID-Lesegerät, in welchem eine Anzahl Abtastwerte eines digitalisierten Signals zur Auswertung mittels eines digitalen Signalprozessors speichert.

Diese Druckschrift bildet den Oberbegriff des Anspruchs 1.

Die Druckschrift EP 1 655 684 A1 - Stobbe et al. "Lesegerät zum berührungslosen Lesen von Transponderdaten" zeigt ein RFID-Lesegerät, welches eine Analyseeinrichtung zur Erfassung von Störungen und Störquellen umfasst.

Es ist also eine Aufgabe der vorliegenden Erfindung, eine einfache, kostengünstige und zuverlässige Methode zur Fehler-analyse beim Datenaustausch zwischen einem Lesegerät und einem mobilen Datenspeicher vorzuschlagen.

Es ist eine Kernidee der Lösung der beschriebenen Aufgabe, das Lesegerät ("Reader") selbst mit den notwendigen Mitteln zur Analyse des funkbasierten Datenaustausches auszustatten, wodurch zum einen schon beim ersten aufgetretenen Fehler eine Analyse desselben möglich ist, zum anderen eine Beeinflussung des produktiven Szenarios durch die Anwesenheit eines zusätzlichen Messempfängers bzw. dessen Antenne unterbleibt, und wodurch weiterhin die in einem Lesegerät ohnehin vorhandenen Mittel, beispielsweise Antenne, Hochfrequenz-Schaltungsteil und Mikroprozessor, auch für die erforderliche Analyse eingesetzt werden können. Schließlich ermöglicht die Integration der Analyseeinrichtung in ein Lesegerät den Zugriff auf genau diejenigen Hochfrequenz- und Zwischenfrequenz-Signale, die auch dem Decoder des produktiven Lesegerätes zugeführt werden bzw. zugeführt worden sind. Durch das Ersetzen der gebräuchlichen "externen Analyse" durch die "interne Analyse" ergibt sich also zum einen eine Zeit- und Kostenersparnis, da Analysegeräte nicht beschafft und installiert werden müssen. Ebenso ergibt sich also eine höhere Qualität der Analyse, da genau dasjenige Signal analysiert wird, welches auch vom Lesegerät selbst verarbeitet wurde, und weiterhin gibt es bei jedem Fehler die Möglichkeit einer (nachträglichen) Analyse, da das derart modifizierte Lesegerät ständig die relevanten Signalanteile speichern kann.

Die Aufgabe wird durch ein Lesegerät gemäß dem Patentanspruch 1 gelöst. Dabei wird ein Lesegerät zum Datenaustausch mit einem mobilen Datenspeicher, insbesondere mit einem UHF-RFID-Transponder, vorgeschlagen, wobei das Lesegerät eine Empfangselektronik zur Umsetzung eines über eine Antenne empfangenen Hochfrequenz-Signals in ein niederfrequentes Signal und eine Decodiereinrichtung zur Umsetzung des niederfrequenten Signals in Daten aufweist. Dabei weist das Lesegerät einen Analog-Digital-Wandler zur Digitalisierung und eine mit diesem verknüpfte Speichereinrichtung zur Speicherung des niederfrequenten Signals eines Schreib- oder Lesezyklus' auf, wobei das Lesegerät eine Analyseeinrichtung zur Auswertung eines derart gespeicherten niederfrequenten Signals aufweist. Dabei ist die Speichereinrichtung bzw. der für die Speicherung des für die Analyse vorgesehenen Signals verwendete Speicher als Ringspeicher organisiert, wobei das Lesegerät dann derart eingerichtet ist, dass eine Speicherung des digitalisierten niederfrequenten Signals so lange fortwährend erfolgt, bis eine Auswertung des gespeicherten niederfrequenten Signals entschieden oder begonnen wird. Dies hat zum Vorteil, dass nur eine begrenzte Menge Speicher für die Analysezwecke reserviert werden muss, der im ereignislosen Fall immer wieder überschrieben werden kann. Ein derart modifiziertes Lesegerät kann bei jeder Fehl-Lesung (Fehl-Erfassung) eines mobilen Datenspeichers eigenständig eine Analyse des verarbeiteten niederfrequenten Signals durchführen, wobei vorteilhaft der ohnehin in den Lesegeräten eingesetzte Analog-Digital-Wandler auch zur Digitalisierung des für die Analysezwecke gespeicherten niederfrequenten Signals eingesetzt werden kann.

Vorteilhafte Ausgestaltungen des erfindungsgemäßen Lesegerätes sind in den abhängigen Patentansprüchen angegeben. Die dabei beschriebenen Merkmale können sowohl einzeln, als auch in freier Kombination miteinander realisiert werden.

Vorteilhaft wird als das niederfrequente Signal das mit einer Zwischenfrequenz gemischte und anschließend gefilterte Hochfrequenzsignal auf zumindest einen Eingang des Analog-Digital-Wandlers geschaltet, was zum Vorteil hat, dass das ohnehin in einem gebräuchlichen Lesegerät bereits vorliegende Zwischenfrequenz- bzw. Niederfrequenzsignal für die Speicherung "gesampled" werden kann. Eine separate Mischstufe ist also nicht erforderlich. Besonders vorteilhaft wird dabei als das niederfrequente Signal ein ohnehin meist benötigtes Quadratur-Signal gespeichert und verarbeitet, wobei die Speichereinrichtung vorteilhaft zur getrennten Speicherung beider Quadratur-Komponenten ausgebildet ist, und wobei die Analyseeinrichtung zur Analyse beider Komponenten des digitalisierten und gespeicherten Quadratur-Signals eingerichtet ist.

In einer besonders vorteilhaften Ausgestaltung der Erfindung kann ein weiterer Speicher oder aber auch ein zweiter Ringspeicher-Bereich zur längerfristigen Speicherung der Analysedaten vorgesehen werden, so dass in den Fällen, in denen eine Analyse eines gespeicherten Signalabschnittes noch nicht abgeschlossen ist, dennoch "im Hintergrund" die Speicherung des digitalisierten niederfrequenten Signals fortgesetzt werden kann. So ist es auch möglich, bei solchen Fehlern, die durch das Lesegerät selbst nicht zufriedenstellend analysiert werden können, den entsprechenden Signalabschnitt dauerhaft zu speichern und einer nachträglichen, ggf. externen, Analyse zuzuführen. So ist es beispielsweise auch möglich, als zweiten Speicherbereich einen - ggf. externen - Massenspeicher einzusetzen, der nicht dieselben Geschwindigkeitsanforderungen erfüllen muss, wie der in "Echtzeit" zu befüllende Ringspeicherbereich. Dieser externe Speicher kann beispielsweise auch als USB-Speicher, als Festplatte oder als Netzwerk-Speicher realisiert sein. Dann steht nach Übertragung des entsprechenden digitalisierten Signalabschnitts in diesen externen Speicher der "interne" Speicherbereich (Ringspeicher) wieder für die Erfassung nachfolgender Kommunikationsereignisse zur Verfügung.

Vorteilhaft ist eine Trigger-Vorrichtung zum Start der Auswertung vorgesehen, wobei für die Trigger-Vorrichtung zumindest eine, vorteilhaft jedoch auch mehrere, auswählbare Trigger-Bedingungen vorgebbar sind. Neben dem "Triggern" auf fehlerhafte Lesevorgänge (Zugriffe) ist es auch möglich, zu Vergleichszwecken positive Beispiele für Kommunikationsereignisse zu speichern und zu analysieren. Sofern eine Triggerbedingung auf das Feststellen eines Fehlers gerichtet ist, können vorteilhaft verschiedene Trigger-Bedingungen für verschiedene Typen von Fehlern vorgesehen sein, wobei je nach Trigger-Bedingung und somit je nach Typ des Ereignisses, welches eine Analyse ausgelöst hat, auch unterschiedliche Analyseverfahren zur Auswertung des gespeicherten Niederfrequenten Signals vorgesehen sein können. Dies bedeutet, dass beispielsweise beim Feststellen fehlerhafter empfangener Daten (z.B. Check-summen-Fehler) ein anderer Signalabschnitt untersucht wird als in den Fällen, in denen beispielsweise eine Kommunikation aufgrund einer fehlerhaften "Präambel" in einem Kommunikationszyklus nicht zustande gekommen ist. Vorteilhaft ist die Trigger-Vorrichtung dabei zur Analyse des decodierten niederfrequenten Signals eingerichtet, wobei in den Fällen, in denen die Daten eine einer Trigger-Bedingung entsprechende Eigenschaft aufweisen, eine Auswertung vorgesehen ist.

Vorteilhaft ist die Analyseeinrichtung zur spektralen Analyse und zur Auswertung zumindest einen spektralen Anteils des aufgezeichneten niederfrequenten Signals eingerichtet. Eine solche spektrale Analyse, die beispielsweise mittels einer schnellen Fourier-Transformation durchgeführt werden kann, können besonders vorteilhaft Störungen durch andere hochfrequente Signale erkannt werden.

Vorteilhaft weist das Lesegerät eine Schnittstelle zum Zugriff auf ein Ergebnis der Auswertung und weiter vorteilhaft auch zum Zugriff auf die gespeicherten Rohdaten, also das gespeicherten niederfrequente Signal, auf. Eine solche Schnittstelle kann vorteilhaft als ein Web-Interface zum Zugriff mittels eines Web-Browsers eines externen Gerätes ausgestaltet sein.

In einer besonders vorteilhaften Ausgestaltung kann die Analyseeinrichtung derart ausgestaltet sein, dass anhand des Ergebnisses der Analyse zumindest ein Betriebsparameter des Lesegerätes, beispielsweise in dessen Hochfrequenz-Teil, angepasst wird.

Eine besonders ökonomische Realisierung des erfindungsgemäßen Lesegerätes ergibt sich, wenn ein ohnehin in dem Lesegerät vorhandener Mikroprozessor, der für die Decodierung des niederfrequenten Signals im Produktivbetrieb zuständig ist, auch zur Auswertung der gespeicherten niederfrequenten Signale verwendet wird. Dasselbe gilt für einen etwaigen bereits vorhandenen Analog-Digital-Wandler, dessen Ausgangssignal, also die digitalen Daten, sowohl der üblichen Decodierung zugeführt werden, als auch zur späteren Analyse in der Speichereinrichtung aufgezeichnet werden. Vorteilhaft wird dann die Auswertung erst nach Vollendung des Kommunikationsereignisses vorgenommen, so dass der Mikroprozessor des Lesegerätes während des Kommunikationsereignisses keine Rechenzeit bzw. Verarbeitungszyklen für die Analyse erübrigen muss, andererseits jedoch sog. "Leerlaufzeiten" zwischen einzelnen Kommunikationsereignissen zur Verarbeitung der gespeicherten Daten verwendet werden können.

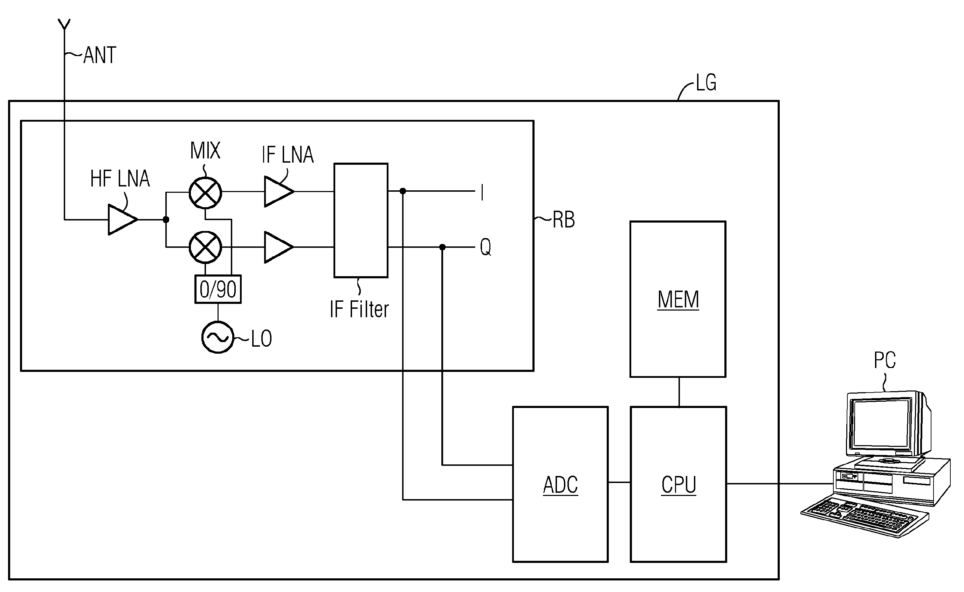

Ein Ausführungsbeispiel des erfindungsgemäßen Lesegerätes wird nachfolgend anhand der Zeichnung erläutert.

Dabei zeigt die einzige Figur in schematischer Darstellung ein Lesegerät mit einer Antenne und einem angeschlossenen externen Gerät (Personal Computer).

In der Figur ist auszugsweise und schematisch als Blockdiagramm ein Lesegerät LG ("Reader") zum Datenaustausch mit einem (nicht dargestellten) mobilen Datenspeicher, beispielsweise ein UHF-RFID-Tag, dargestellt. Das Lesegerät LG ist mit einem Personal-Computer PC und mit einer Antenne ANT verbunden; die Antenne kann selbstverständlich auch integraler Bestandteil des Lesegerätes LG sein. Anstelle oder zusätzlich zum dargestellten Personal-Computer PC kann das Lesegerät LG auch an einer industriellen Steuerung (speicherprogrammierbare Steuerung - SPS) angeschlossen sein, wobei das Lesegerät LG in einer vorteilhaften Ausgestaltung an einem Datennetzwerk (z.B. Ethernet, Profinet o.ä.) angeschlossen ist, womit ein auch simultaner Datenaustausch mit einer Vielzahl anderer Komponenten möglich ist.

Das Lesegerät LG umfasst einen Empfangsbaustein RB ("Receiver-Block"), wobei auch Ausführungsformen möglich sind, bei denen ein kombinierter Sende- und Empfangsbaustein, ein sog. "Hochfrequenzmodul", zum Einsatz kommt. In dem Empfangsbaustein RB wird das Hochfrequenzsignal der Antenne ANT einem Eingangsverstärker HF LNA ("High-Frequency Low-Noise-Amplifier") zugeführt, wonach das derart verstärkte Signal einer Mischstufe MIX zugeführt wird, wo es mit der Zwischenfrequenz eines Oszillators LO ("Local Oscillator") und dem phasenverschobenen Signal desselben Oszillators LO gemischt wird. Die beiden resultierenden Signalanteile werden jeweils durch eine Verstärkerstufe IF LNA (Intermediate-Frequency Low-Noise-Amplifier") verstärkt und einem Zwischenfrequenzfilter IF Filter ("Inter-Frequency Filter") zugeführt wird. Die beiden resultierenden Signalanteile I, Q bilden zusammen ein niederfrequentes Signal, was in einer Anordnung gemäß dem Stand der Technik nun decodiert wird, wobei die Nutzdaten aus dem empfangenen Signal wiedergewonnen werden. Zur Decodierung wird das Signal einem Analog-Digital-Wandler ADC zugeführt, wonach das derart digitalisierte Niederfrequenz-Signal decodiert wird. Zur Decodierung kann ein Baustein mit einer festgelegten Logik, beispielsweise ein ASIC, eingesetzt werden; im vorliegenden Ausführungsbeispiel wird ein Mikroprozessor CPU dafür verwendet.

Das niederfrequente Signal, welches auch "heruntergemischtes Basisbandsignal" genannt wird, wird im vorliegenden Ausführungsbeispiel getrennt als 2-Komponenten-Quadratursignal verarbeitet; in einer alternativen Ausführungsform kann auch eine andere Darstellung des (gemischten und gefilterten) Basisbandsignals, beispielsweise getrennt nach Betrag und Phasenwinkel, verarbeitet werden, was in der Folge, also nach der Analog-Digital-Umsetzung, auch zu einer abweichenden numerischen Darstellung führt. Bei entsprechend schnellen AD-Wandler(n) und Speichern kann auch ein hochfrequenteres Signal als das hier betrachtete gespeichert und ausgewertet werden, insbesondere bei Empfängern mit mehreren Mischstufen und Zwischenfrequenzen; auch die simultane Speicherung der Signale unterschiedlicher Verarbeitungsstufen ist bei entsprechender Ausstattung möglich..

Erfindungsgemäß wird das niederfrequente Signal I, Q (das heruntergemischte Basisbandsignal) nach der Analog-DigitalWandlung in einem Speicherbereich fortlaufend gespeichert, wobei dieser Speicherbereich als ein Ringspeicher (auch als Ringpuffer bezeichnet) organisiert ist. Die Größe dieses Ringspeichers ist idealer Weise mindestens so groß, dass mindestens ein Kommunikationsereignis, also ein Schreib- oder Lese-Zyklus, aufgezeichnet werden kann. Der für die Organisation der Speicherung zuständige Mikroprozessor CPU und die Zugriffsmöglichkeiten auf den Speicher MEM ("Memory"), der den Speicherbereich umfasst, müssen dabei derart ausgelegt sein, dass die Speicherung ausreichend schnell und auch unabhängig vom eigentlichen Schreib-Leseauftrag des Lesegerätes LG erfolgen kann.

Mittels des Mikroprozessors CPU bzw. mittels dessen Software (im Prinzipschaubild nicht dargestellt) ist eine Triggerung realisiert, die aufgrund festgestellter Zustände oder Ereignisse die Aufzeichnung in dem Ringspeicher stoppt und danach eine Auswertung des gespeicherten zeitlichen Verlaufes des niederfrequenten Signals auslöst. Idealer Weise sind verschiedene Fehlerzustände oder auch Nicht-Fehlerzustände als Triggerereignis konfigurierbar. In einer vorteilhaften Ausführungsform können einzelne oder auch alle Triggerereignisse derart konfiguriert sein, dass der beim Auftreten des Ereignisses vorliegende Inhalt des Ringspeicherbereichs, also des Speichers MEM bzw. des als Ringspeicher verwendeten Teils des Speichers MEM, gesichert wird. Dies bedeutet, dass der betreffende Speicherinhalt entweder gegen weiteres Überschreiben geschützt wird, oder aber in einen anderen Speicher für eine spätere Auswertung kopiert wird, wobei dieser andere Speicher auch ein externer Speicher in Gestalt eines Netzwerk-Speichers, einer externen Festplatte oder dgl. sein kann. Es ist auch möglich, mehrere Ringspeicher-Bereiche zu definieren, die nacheinander und unabhängig voneinander gefüllt werden, wobei es auch möglich ist, einzelnen oder mehreren Fehlerarten bzw. Trigger-Ereignissen unterschiedliche Ringspeicher-Bereiche zuzuweisen.

Nach Abschluss des zu untersuchenden Kommunikationsereignisses, also idealer Weise dann, wenn der Mikroprozessor CPU nicht mehr mit seiner nahezu vollständigen Verarbeitungskapazität für den Regelbetrieb des Lesegerätes LG benötigt wird, werden die gespeicherten Daten aufbereitet, beispielsweise für eine spätere Visualisierung. Dazu verfügt das Lesegerät LG über einen entsprechenden Software-Baustein, der diese Aufgabe durchführen kann, wobei dieser Software-Baustein beispielsweise Methoden für eine spektrale Analyse (z.B. schnelle Fourier-Transformation), statistische Auswertungen, Signalstärke- und Signalqualitäts-Auswertungen etc. umfasst. Zur Visualisierung der Daten kann beispielsweise ein Web-Browser des angeschlossenen Personal-Computers PC verwendet werden, wobei dementsprechend das Lesegerät LG einen integrierten Web-Server aufweisen sollte. Das Lesegerät LG ist vorteilhaft auch in der Lage, die ggf. bereits untersuchten "Rohdaten" ("Air Interface Shot"), also das gespeicherte niederfrequente Signal, für eine zusätzliche oder alternative externe Auswertung zu einem externen Gerät, beispielsweise dem Personal-Computer PC, zu übertragen.

In einer weiteren, vorteilhaften Ausgestaltung der Erfindung können als Ergebnis der Analyse auch Anweisungen resultieren, die eine Veränderung von Parametern des Lesegerätes LG selbst betreffen. Dies kann z.B. eine Veränderung der Betriebsparameter der integrierten Verstärker HF LNA, IF LNA, eine Anpassung der Frequenz des lokalen Oszillators LO, eine Änderung der Abstimmung oder Ausrichtung der Antenne ANT oder ähnliches betreffen.

Im Idealfall unterscheidet sich die Hardware des erfindungsgemäßen Lesegerätes LG von einem Lesegerät aus dem Stand der Technik im Wesentlichen nur durch das Vorsehen eines ausreichend großen Speichers MEM, der in der Lage sein sollte, die zusätzlichen Daten, nämlich das in dem Ringspeicherbereich aufgezeichnete niederfrequente Signal, und die Software zur Auswertung dieses aufgezeichneten niederfrequenten Signals, zusätzlich zu der eigentlichen Betriebssoftware (Firmware) des gebräuchlichen Lesegerätes LG aufzunehmen.

In einer vorteilhaften Ausgestaltung weist das Lesegerät LG zusätzliche Anzeigemittel, beispielsweise in Form von Signalleuchten oder eines alphanumerischen Displays, auf, wobei damit festgestellte Fehler und Fehler-Arten (Fehler-Codes, Klartext) ausgegeben werden können. In einer weiteren, alternativen Ausführungsform kann das Lesegerät LG auch mit einer zusätzlichen Schnittstelle, beispielsweise einer USB-Schnittstelle, ausgestattet sein, wobei in den Fällen, in denen das Lesegerät LG eine Analyse des Datenaustauschs über die Luftschnittstelle vornehmen soll, an diese externe Schnittstelle ein Speichermedium (USB-Stick o.ä.) angekoppelt wird, wobei das Lesegerät LG im Gegenzug die Ergebnisse seiner Analysen und/oder die "Rohdaten" auf diesem Speichermedium niederlegt.

## Patentansprüche

1. Lesegerät (LG) zum Datenaustausch mit einem mobilen Datenspeicher, insbesondere mit einem UHF-RFID-Transponder,
wobei das Lesegerät (LG) eine Empfangselektronik zur Umsetzung eines über eine Antenne (ANT) empfangenen Hochfrequenz-Signals in ein niederfrequentes Signal (I, Q) und eine Decodiereinrichtung zur Umsetzung des niederfrequenten Signals in Daten aufweist,
wobei das Lesegerät (LG) einen Analog-Digital-Wandler (ADC) zur Digitalisierung und eine mit diesem verknüpfte Speichereinrichtung (MEM) zur Speicherung des niederfrequenten Signals (I, Q) zumindest eines zeitlichen Abschnitts eines Kommunikationsereignisses aufweist, und
wobei das Lesegerät (LG) eine Analyseeinrichtung zur Auswertung eines derart gespeicherten niederfrequenten Signals (I, Q) aufweist,
**dadurch gekennzeichnet,**
**dass** die Speichereinrichtung (MEM) einen als Ringspeicher organisierten Speicher aufweist, wobei das Lesegerät (LG) derart eingerichtet ist, dass eine Speicherung des digitalisierten niederfrequenten Signals (I, Q) so lange fortwährend erfolgt, bis eine Auswertung des gespeicherten niederfrequenten Signals (I, Q) begonnen wird, und
**dass** die Größe des Ringspeichers derart bemessen ist, dass ein Schreib- oder Lese-Zyklus speicherbar ist.

2. Lesegerät (LG) nach Patentanspruch 1,
**dadurch gekennzeichnet,**
**dass** als das niederfrequente Signal (I, Q) das mit einer Zwischenfrequenz gemischte und anschließend gefilterte Hochfrequenz-Signal auf zumindest einen Eingang des Analog-DigitalWandlers (ADC) geschaltet ist.

3. Lesegerät (LG) nach einem der vorhergehenden Patentansprüche,
**dadurch gekennzeichnet,**
**dass** das niederfrequente Signal (I, Q) ein Quadratur-Signal ist, wobei die Speichereinrichtung (MEM) zur getrennten Speicherung beider Komponenten des Quadratur-Signals ausgebildet ist, und wobei die Analyseeinrichtung zur Analyse beider Komponenten des digitalisierten und gespeicherten Quadratur-Signals eingerichtet ist.

4. Lesegerät (LG) nach einem der vorhergehenden Patentansprüche,
**dadurch gekennzeichnet,**
**dass** eine Trigger-Vorrichtung zum Start der Auswertung vorgesehen ist.

5. Lesegerät (LG) nach Patentanspruch 4,
**dadurch gekennzeichnet,**
**dass** für die Trigger-Vorrichtung zumindest eine TriggerBedingung vorgebbar ist.

6. Lesegerät (LG) nach Patentanspruch 5,
**dadurch gekennzeichnet,**
**dass** mehrere Trigger-Bedingungen vorgebbar sind, wobei für die Analyseeinrichtung für zumindest zwei verschiedene Trigger-Bedingungen zwei unterschiedliche Analyseverfahren zur Auswertung des gespeicherten niederfrequenten Signals (I, Q) vorgesehen sind.

7. Lesegerät (LG) nach einem der Patentansprüche 4 bis 6,
**dadurch gekennzeichnet,**
**dass** die Trigger-Vorrichtung zur Analyse des decodierten niederfrequenten Signals (I, Q) eingerichtet ist, wobei in den Fällen, in denen die Daten eine einer Trigger-Bedingung entsprechende Eigenschaft aufweisen, eine Auswertung vorgesehen ist.

8. Lesegerät (LG) nach einem der vorhergehenden Patentansprüche,
**dadurch gekennzeichnet,**
**dass** das Lesegerät (LG) zumindest eine weitere Speichereinrichtung (MEM) aufweist, wobei in der zumindest einen weiteren Speichereinrichtung (MEM) ein zeitlicher Abschnitt des niederfrequenten Signals (I, Q) für eine spätere Auswertung speicherbar ist.

9. Lesegerät (LG) nach einem der vorhergehenden Patentansprüche,
**dadurch gekennzeichnet,**
**dass** die Analyseeinrichtung zur spektralen Analyse und zur Auswertung zumindest einen spektralen Anteils des aufgezeichneten niederfrequenten Signals (I, Q) eingerichtet ist.

10. Lesegerät (LG) nach einem der vorhergehenden Patentansprüche,
**dadurch gekennzeichnet,**
**dass** das Lesegerät (LG) eine Schnittstelle zum Zugriff auf ein Ergebnis der Auswertung aufweist.

11. Lesegerät (LG) nach Patentanspruch 10,
**dadurch gekennzeichnet,**
**dass** mittels der Schnittstelle das gespeicherte niederfrequente Signal (I, Q) abrufbar ist.

12. Lesegerät (LG) nach einem der Patentansprüche 10 oder 11,
**dadurch gekennzeichnet,**
**dass** die Schnittstelle als ein Web-Interface zum Zugriff mittels eines Web-Browsers eines mittels einer Kommunikationsverbindung mit dem Lesegerät (LG) verbundenen Gerätes (PC) ausgestaltet ist.

13. Lesegerät (LG) nach einem der vorhergehenden Patentansprüche,
**dadurch gekennzeichnet,**
**dass** die Analyseeinrichtung derart ausgestaltet ist, dass diese zur Änderung zumindest eines Betriebsparameters des Lesegerätes (LG) anhand eines Ergebnisses der Auswertung eingerichtet ist.

14. Lesegerät (LG) nach einem der vorhergehenden Patentansprüche,
**dadurch gekennzeichnet,**
**dass** das Lesegerät (LG) einen Mikroprozessor umfasst, wobei dieser Mikroprozessor (CPU) sowohl zur Decodierung des niederfrequenten Signals (I, Q) als auch zur Auswertung des gespeicherten niederfrequenten Signals (I, Q) eingerichtet ist.

15. Lesegerät (LG) nach Patentanspruch 14,
**dadurch gekennzeichnet,**
**dass** das Lesegerät (LG) derart ausgestaltet ist, dass die Auswertung nach Vollendung des Schreib- oder Lese-Zyklus' vorgenommen wird.

## Claims

1. Reader (LG) for data interchange with a mobile data memory, particularly with a UHF RFID transponder,
wherein the reader (LG) has reception electronics for converting a high frequency signal, received via an antenna (ANT), into a low frequency signal (I, Q) and has a decoding device for converting the low frequency signal into data, wherein the reader (LG) has an analog-digital converter (ADC) for digitizing and a memory device (MEM), linked thereto, for storing the low frequency signal (I, Q) from at least one period of time from a communication event, and
wherein the reader (LG) has an analysis device for evaluating a low frequency signal (I, Q) stored in this manner, **characterized**
**in that** said memory device (MEM) has a memory organized as a ring memory, wherein the reader (LG) is set up such that the digitized low frequency signal (I, Q) is stored continually until evaluation of the stored low frequency signal (I, Q) is begun, and in that the size of the ring memory is dimensioned such that a read or write cycle can be stored.

2. Reader (LG) according to Patent Claim 1,
**characterized**
**in that** the low frequency signal (I, Q) connected to at least one input of the analog-digital converter (ADC) is the high frequency signal which has been mixed with an intermediate frequency and subsequently filtered.

3. Reader (LG) according to either of the preceding patent claims,
**characterized,**
**in that** the low frequency signal (I, Q) is a quadrature signal, wherein the memory device (MEM) is designed to store both components of the quadrature signal separately, and wherein the analysis device is designed to analyze both components of the digitized and stored quadrature signal.

4. Reader (LG) according to one of the preceding patent claims,
**characterized**
**in that** a trigger apparatus is provided to start the evaluation.

5. Reader (LG) according to Patent Claim 4,
**characterized**
**in that** at least one trigger condition can be prescribed for the trigger apparatus.

6. Reader (LG) according to Patent Claim 5,
**characterized**
**in that** a plurality of trigger conditions can be prescribed, wherein two different analysis methods for evaluating the stored low frequency signal (I, Q) are provided for the analysis device for at least two different trigger conditions.

7. Reader (LG) according to one of Patent Claims 4 to 6,
**characterized**
**in that** the trigger apparatus is set up to analyze the decoded low frequency signal (I, Q), wherein evaluation is provided in those cases in which the data have a property which corresponds to a trigger condition.

8. Reader (LG) according to one of the preceding patent claims,
**characterized**
**in that** the reader (LG) has at least one further memory device (MEM), wherein the at least one further memory device (MEM) can be used to store a period of time from the low frequency signal (I, Q) for later evaluation.

9. Reader (LG) according to one of the preceding patent claims,
**characterized**
**in that** the analysis device is set up for spectral analysis and for evaluation of at least one spectral component of the recorded low frequency signal (I, Q).

10. Reader (LG) according to one of the preceding patent claims,
**characterized**
**in that** the reader (LG) has an interface for accessing a result of the evaluation.

11. Reader (LG) according to Patent Claim 10,
**characterized**
**in that** the interface can be used to retrieve the stored low frequency signal (I, Q).

12. Reader (LG) according to either of Patent Claims 10 and 11,
**characterized**
**in that** the interface is in the form of a web interface for access by means of a web browser of an appliance (PC) that is connected to the reader (LG) by means of a communication link.

13. Reader (LG) according to one of the preceding patent claims,
**characterized**
**in that** the analysis device is in a form such that it is set up to change at least one operating parameter of the reader (LG) using a result of the evaluation.

14. Reader (LG) according to one of the preceding patent claims,
**characterized**
**in that** the reader (LG) comprises a microprocessor, wherein said microprocessor (CPU) is set up both to decode the low frequency signal (I, Q) and to evaluate the stored low frequency signal (I, Q).

15. Reader (LG) according to Patent Claim 14,
**characterized**
**in that** the reader (LG) is in a form such that the evaluation is performed following completion of the read or write cycle.

## Revendications

1. Appareil (LG) de lecture pour l'échange de données avec une mémoire de données mobiles, notamment avec un transpondeur UHF-RFID, l'appareil (LG) de lecture ayant une électronique de réception pour la transformation d'un signal de haute fréquence reçu par l'intermédiaire d'une antenne (ANT) en un signal (I, Q) de basse fréquence, et un dispositif de décodage pour transformer le signal de basse fréquence en des données,
dans lequel l'appareil (LG) de lecture a un convertisseur (ADC) analogique-numérique pour la numérisation et un dispositif (MEM) de mémorisation combiné à celui-ci pour la mémorisation du signal (I, Q) de basse fréquence d'au moins un segment temporel d'un évènement de communication, et
dans lequel l'appareil (LG) de lecture a un dispositif d'analyse pour l'exploitation d'un signal (I, Q) de basse fréquence ainsi mémorisé,
**caractérisé en ce que**
le dispositif (MEM) de mémorisation a une mémoire organisée en mémoire annulaire, l'appareil (LG) de lecture étant conçu pour effectuer continuellement une mémorisation du signal (I, Q) de basse fréquence numérisé jusqu'à ce qu'une exploitation du signal (I, Q) de basse fréquence mémorisé ait commencé, et
**en ce que** la dimension de la mémoire annulaire est dimensionnée de manière à pouvoir mémoriser un cycle d'écriture ou de lecture.

2. Appareil (LG) de lecture suivant la revendication 1,
**caractérisé**
**en ce qu'**il est appliqué à au moins une entrée du convertisseur (ADC) analogique-numérique comme signal (I, Q) de basse fréquence, le signal de haute fréquence mélangé à une fréquence intermédiaire et filtré ensuite.

3. Appareil (LG) de lecture suivant l'une des revendications précédentes,
**caractérisé**
**en ce que** le signal (I, Q) de basse fréquence est un signal en quadrature, le dispositif (MEM) de mémorisation étant constitué pour la mémorisation de façon séparée de deux composants du signal en quadrature, et le dispositif d'analyse étant conçu pour l'analyse des deux composants du signal en quadrature numérisé et mémorisé.

4. Appareil (LG) de lecture suivant l'une des revendications précédentes,
**caractérisé**
**en ce qu'**il est prévu un dispositif de déclenchement pour faire commencer l'exploitation.

5. Appareil (LG) de lecture suivant la revendication 4,
**caractérisé**
**en ce qu'**il peut être prescrit au dispositif de déclenchement au moins une condition de déclenchement.

6. Appareil (LG) de lecture suivant la revendication 5,
**caractérisé**
**en ce qu'**il peut être prescrit plusieurs conditions de déclenchement, dans lequel il est prévu, pour le dispositif d'analyse pour au moins deux conditions de déclenchement différentes, deux procédés d'analyse différents d'exploitation du signal (I,Q) de basse fréquence mémorisé.

7. Appareil (LG) de lecture suivant l'une des revendications 4 à 6,
**caractérisé**
**en ce que** le dispositif de déclenchement est conçu pour l'analyse du signal (I, Q) de basse fréquence décodé, dans lequel, dans les cas dans lesquels les données ont une propriété correspondant à une condition de déclenchement, il est prévu une exploitation.

8. Appareil (LG) de lecture suivant l'une des revendications précédentes,
**caractérisé**
**en ce que** l'appareil (LG) de lecture a au moins un autre dispositif (MEM) de mémorisation dans lequel, dans le au moins un autre dispositif (MEM) de mémorisation, peut être mémorisé un segment temporel du signal (I, Q) de basse fréquence pour une exploitation ultérieure.

9. Appareil (LG) de lecture suivant l'une des revendications précédentes,
**caractérisé en ce que**
le dispositif d'analyse est conçu pour l'analyse spectrale et pour l'exploitation d'au moins une composante spectrale du signal (I, Q) de basse fréquence enregistré.

10. Appareil (LG) de lecture suivant l'une des revendications précédentes,
**caractérisé**
**en ce que** l'appareil (LG) de lecture a une interface pour l'accès à un résultat de l'exploitation.

11. Appareil (LG) de lecture suivant la revendication 10,
**caractérisé**
**en ce que** le signal (I, Q) de basse fréquence mémorisé peut être rappelé au moyen de l'interface.

12. Appareil (LG) de lecture suivant la revendication 10 ou 11, **caractérisé**
**en ce que** l'interface est conformée en une interface Web pour l'accès au moyen d'un navigateur Web d'un appareil (PC) relié à l'appareil (LG) de lecture au moyen d'une liaison de communication.

13. Appareil (LG) de lecture suivant l'une des revendications précédentes,
**caractérisé**
**en ce que** le dispositif d'analyse est conformé de manière à ce que celui-ci soit conçu pour la modification d'au moins un paramètre de fonctionnement de l'appareil (LG) de lecture à l'aide d'un résultat de l'exploitation.

14. Appareil (LG) de lecture suivant l'une des revendications précédentes,
**caractérisé**
**en ce que** l'appareil (LG) de lecture comprend un microprocesseur, ce microprocesseur (CPU) étant conçu à la fois pour le décodage du signal (I, Q) de basse fréquence et pour l'exploitation du signal (I, Q) de basse fréquence mémorisé.

15. Appareil (LG) de lecture suivant la revendication 14,
**caractérisé**
**en ce que** l'appareil (LG) de lecture est conformé de manière à effectuer l'exploitation après l'achèvement du cycle d'écriture ou de lecture.
